Europäisches Patentamt

European Patent Office

Office européen des brevets

(19)

(11)     **EP 1 070 268 B1**

(12)     **EUROPÄISCHE PATENTSCHRIFT**

(45) Veröffentlichungstag und Bekanntmachung des Hinweises auf die Patenterteilung:
**02.01.2003   Patentblatt 2003/01**

(51) Int Cl.⁷: **G02B 5/20**

(21) Anmeldenummer: **99919211.5**

(22) Anmeldetag: **06.04.1999**

(86) Internationale Anmeldenummer:
**PCT/EP99/02367**

(87) Internationale Veröffentlichungsnummer:
**WO 99/052001 (14.10.1999 Gazette 1999/41)**

(54) **VERFAHREN ZUR HERSTELLUNG VON RESONANTEN FILTERN**

METHOD FOR PRODUCING RESONANT FILTERS

PROCEDE DE PRODUCTION DE FILTRES RESONNANTS

(84) Benannte Vertragsstaaten:
**DE GB NL**

(30) Priorität: **07.04.1998   DE 19816574**

(43) Veröffentlichungstag der Anmeldung:
**24.01.2001   Patentblatt 2001/04**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **GOMBERT, Andreas**
  **D-79106 Freiburg (DE)**
• **HEINZEL, Andreas**
  **D-79100 Freiburg (DE)**
• **WITTWER, Volker**
  **D-79112 Freiburg (DE)**
• **ZANKE, Christel**
  **D-79102 Freiburg (DE)**
• **BOERNER, Volkmar**
  **D-79106 Freiburg (DE)**

(74) Vertreter: **Pfenning, Meinig & Partner**
**Kurfürstendamm 170**
**10707 Berlin (DE)**

(56) Entgegenhaltungen:
**US-A- 5 530 564          US-A- 5 611 870**

• **H. ARITOME ET AL.: "Fabrication method and efficiency of new soft X-ray diffraction gratings: bakable laminar gratings and transmission gratings for synchrotron radiation spectroscopy" NUCLEAR INSTRUMENTS & METHODS IN PHYSICS RESEARCH., Bd. 208, Nr. 1/3, April 1983 (1983-04), Seiten 233-236, XP002115269 NORTH-HOLLAND PUBLISHING COMPANY. AMSTERDAM., NL**
• **D.M. BYRNE: "Infrared mesh filters fabricated by electron-beam lithography" JOURNAL OF VACUUM SCIENCE AND TECHNOLOGY: PART B., Bd. 3, Nr. 1, Januar 1985 (1985-01), Seiten 268-271, XP002115270 NEW YORK US**

**Beschreibung**

Die Erfindung betrifft ein Verfahren zur Herstellung von resonanten Filtern.

In vielen optischen Anwendungen werden spezielle Strahlungsspektren durch optische Filter erzeugt. Dazu sind beispielsweise Interferenzfilter, Plasmafilter, Absorptionsfilter und resonante Metallfilter bekannt. Ein Anwendungsgebiet für Filter ist die Thermophotovoltaik, bei der die Strahlung eines heißen Emitters durch eine Photozelle in elektrische Energie konvertiert wird. Da das Strahlungspektrum eines schwarzen Körpers jedoch nicht mit der Empfindlichkeit einer Photozelle übereinstimmt, ist eine Anpassung des Spektrums an die Empfindlichkeit der Photozelle wünschenswert. Insbesondere der Teil des Spektrums, der langwelliger als die Bandkante der Photozelle ist, führt zu einer unerwünschten Erwärmung der Photozelle. Es muß daher ein Filter gefunden werden, das in dem gewünschten Wellenlängenbereich eine hohe Transmission und in dem langwelligen Teil des Spektrums eine geringe Absorption aufweist.

Das Interferenzfilter besteht aus zwei oder mehr dielektrischen Schichten mit unterschiedlichen Brechungsindizes, die zu einer destruktiven Interferenz an den Grenzschichten führen und so einen Bandpaßfilter darstellen. Interferenzfilter haben jedoch den Nachteil eines stark winkelabhängigen Transmissionsverhaltens.

Plasmafilter nützen die optischen Eigenschaften von Halbleitermaterialien aus. Hierzu wird zum Beispiel indiumdotiertes Zinnoxid (ITO) verwendet. Im Bereich der Plasmakante oberhalb einer Wellenlänge von 1 µm wechselt das Verhalten von einem dielektrischen Verhalten mit hoher Transmission zu einem metallischen Verhalten mit hoher Reflexion. Ein Nachteil dieser Filter ist jedoch die hohe Absorption im Bereich der Plasmakanten, die zu einer unerwünschten Erwärmung des Filters führt.

Ein Absorptionsfilter wird insbesondere als sogenannte Farbglaskombination eingesetzt. Aufgrund der systemimmanenten Absorption ist der Filtertyp für die Thermophotovoltaik nicht interessant.

Die Veröffenltichung "Fabrication Method and Efficiency of new soft X-ray Diffraction Gratings: Bakable Laminar Gratings and Transmission Gratings for Synchronotron Radiation Specroscopy" von H. Aritome et al., Nuclear Instruments & Methods in Physics Research Bol. 208 (1983) No. 1/3 pp. 233 - 236 beschreibt die Herstellung eines Liniargitters für Syndrotronstrahlung. Dabei wird ein transparentes Substrat mit einem dünnen Goldfilm beschichtet und ein Photoresist aufgebracht. Der Photoresist wird mit periodischen Gitterstreifen belichtet und entwickelt. Der freiliegende Goldfilm wird unter Verwendung des verbleibenden Photoresist als Ätzmaske abgeätzt und der Photoresist wird anschließend entfernt.

Eine weitere Ausführungsform für optische Filter besteht in sogenannten resonanten Filtern, die typischerweise eine periodisch mikrostrukturierte Beschichtung aus Metall auf einem für den gewünschten Wellenlängenbereich transparenten Substrat aufweisen. Dabei werden Kreuzschlitze oder Löcher unterschiedlicher Formen in einen geschlossenen Metallfilm eingebracht, wobei diese Strukturen als Antennenarrays wirken.

Aufgrund von Resonanzen des einfallenden E-Feldes mit der periodischen Struktur entsteht eine Bandpaß- oder auch Kurzpaßcharakteristik des Filters bezüglich der transmittierten Strahlung. Die Resonanzfilter besitzen im langwelligen Bereich die hohe Reflexion des Metallfilms und haben jedoch im Resonanzbereich eine hohe Transmission bei einer sehr niedrigen Absorption und somit eine geringe thermische Empfindlichkeit der Filterfunktion. Zudem weisen resonante Filter eine nur sehr geringe Winkelabhängigkeit in der Transmission auf und bei unterschiedlichen Einfallswinkeln verändert die Position maximaler Wellenlänge nicht. Alle diese Vorteile machen den resonanten Filter besonders für die Anwendung in der Thermophotovoltaik interessant.

Die Hauptschwierigkeit liegt in der Herstellung der resonanten Filter, die je nach Anwendung Strukturen mit Perioden < 1 µm und Strukturdetails < 100 nm aufweisen müssen. In der Veröffentlichung W.E. Horne et al "IR Filters for TPV Converter Modules" in The Second NREL Conference on Thermophotovoltaic Generation of Electricity, ISBN 1-56396-509-7, wird als Verfahren zur Herstellung das Elektronenstrahlschreiben und das Ionenstrahlschreiben vorgeschlagen. Dieses Verfahren ist jedoch relativ kostenaufwendig und für großflächige Filter schlecht anwendbar.

Der Erfindung liegt daher die Aufgabe zugrunde, ein Verfahren zur Herstellung von resonanten Filtern zu schaffen, das kostengünstiger als das Verfahren nach dem Stand der Technik ist und mit dem Filter mit großen Flächen hergestellt werden können.

Diese Aufgabe wird erfindungsgemäß durch die Merkmale der unabhängigen Ansprüche gelöst.

Durch die in den Unteransprüchen angegebenen Maßnahmen sind vorteilhafte Weiterbildungen und Verbesserungen möglich.

Mit dem erfindungsgemäßen Herstellverfahren können kostengünstig resonante Filter hergestellt werden, wobei auch eine Anwendung für große Flächen denkbar ist, wie zum Beispiel für Wärmeschutzgläser mit sehr hoher Transmission.

Im folgenden wird das erfindungsgemäße Verfahren beschrieben, wobei die beigefügte Zeichnung zur Erläuterung herangezogen wird.

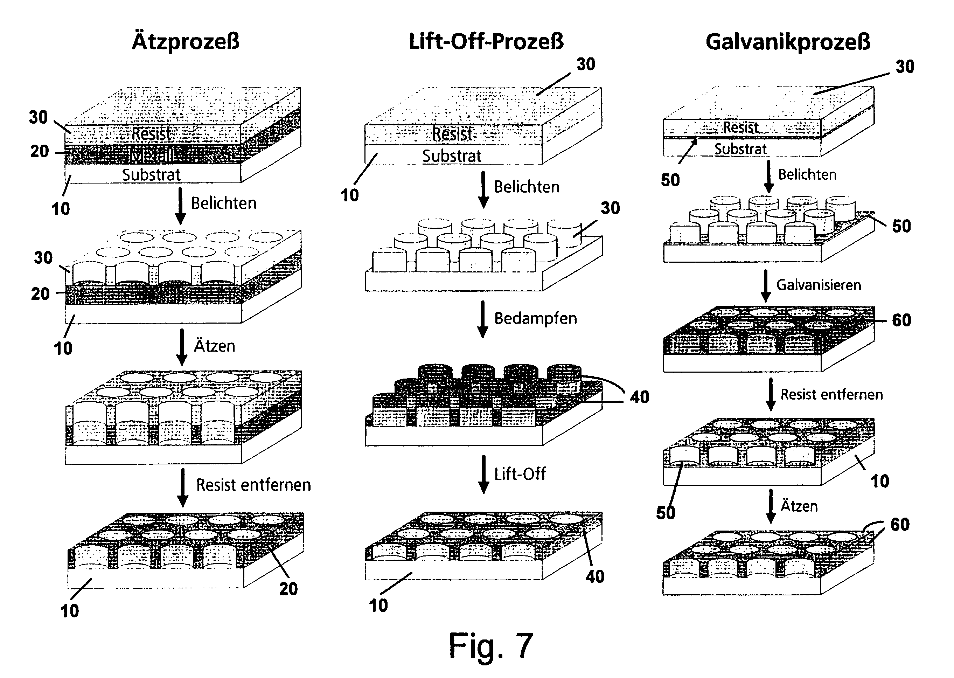

In Fig. 7 sind drei verschiedene Verfahren zur Herstellung von resonanten Filtern dargestellt, das Ätzverfahren, das Lift-Off Verfahren und das Galvanikverfahren.

Entsprechend dem Ätzverfahren wird auf ein für den gewünschten Wellenlängenbereich transparentes Substrat 10 ein Metallfilm oder eine Metallschicht 20, vorzugsweise entsprechend einem Vakuumbeschichtungsverfahren abgeschieden. Dieser Metallfilm 20 wird mit einer Photoresistschicht 30 überdeckt und anschließend holographisch belichtet. Bei dem holographischen Belichtungsverfahren werden mindestens zwei kohärente Wellen überlagert. Dadurch entsteht ein Interferenzmuster feiner Struktur. Die holographische Belichtung wird vorzugsweise in zwei oder mehreren Belichtungsschritten oder mit mehr als zwei überlagerten kohärenten Wellen durchgeführt, wobei zwischen den Belichtungsschritten das Substrat gedreht wird.

Bei den zwei oder mehreren Belichtungsschritten wird die Photoresistschicht 30 mit einem Muster mit periodisch angeordneten Strukturelementen belichtet, wobei die Strukturelemente rund, eckig, schlitzförmig oder sternförmig ausgebildet sein können.

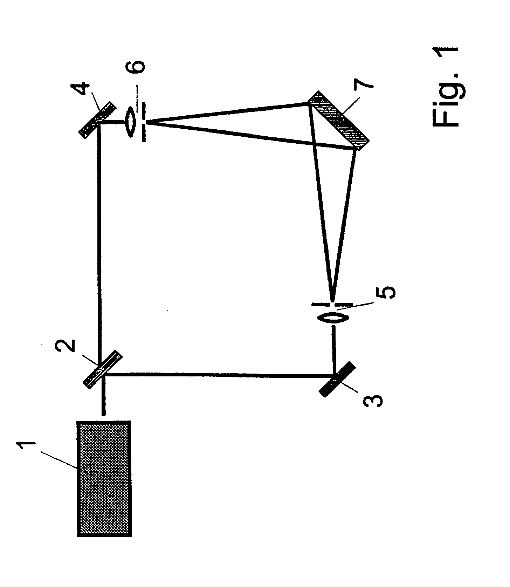

In Fig. 1 ist schematisch ein Belichtungsaufbau dargestellt. Dabei wird ein von einer Laserquelle 1 ausgesandtes kohärentes Strahlenbündel der Wellenlänge $\lambda_0$ durch einen Strahlteiler 2, der ein Teil der Strahlung transmittiert und den anderen Teil reflektiert, in zwei Wellen aufgespalten, wobei jedes Wellenfeld jeweils von einer Umlenkeinheit 3, 4 umgelenkt und jeweils über ein Raumfilter 5, 6, zum Beispiel eine Sammellinse mit einer Lochblende aufgeweitet und auf die Probe 7 gestrahlt wird, wodurch sie überlagert werden. Die so entstehende, das heißt belichtete Interferenzstruktur, weist eine Periode $\Lambda$ auf, die wie folgt bestimmt ist:

$$\Lambda = \frac{\lambda_0}{2\sin\delta}$$

wobei $\delta$ der Winkel ist, den die Ausbreitungsrichtungen der symmetrisch einfallenden Wellen mit der Normalen auf die Probe einschließen und $\lambda_0$ die Wellenlänge der kohärenten Strahlung ist.

Nach dem Belichten der Photoresistschicht 30 (siehe Fig. 7) wird diese vorzugsweise bis zum Metallfilm 20 durchentwikelt, derart, daß der Metallfilm 20 entsprechend dem vorgegebenen Muster freigelegt wird. Mit einem Ätzverfahren, beispielsweise durch reaktives Ionenätzen oder naßchemisches Ätzen werden dann in den Metallfilm 20 Löcher entsprechend der vorgegebenen Form geätzt, so daß sich eine periodische Struktur ergibt, wobei der übriggebliebene Photoresist 30 als Ätzmaske wirkt. Anschließend wird die verbliebene Photoresistschicht 30 entfernt.

In Fig. 7 sind auch das Lift-Off Verfahren und das Galvanikverfahren dargestellt, wobei sich diese beiden Verfahren von dem Ätzverfahren (linke Darstellung in Fig. 7) unter anderem dadurch unterscheiden, daß die holographische Belichtungstechnik, die bei allen Verfahren angewandt wird, invertiert wird, d.h. die Photoresistschicht 30 wird so belichtet, daß eine gegenüber dem Ätzverfahren invertierte Photoresistmaske entsteht. Dadurch sind größere homogen strukturierte Filterflächen erreichbar.

Bei dem Lift-Off Verfahren (Fig.7 Mitte) wird auf das transparente Substrat 10 zuerst die Resistschicht 30 aufgebracht und, wie oben beschrieben, holographisch belichtet und entwickelt. Es bleiben dabei die Stellen stehen, an denen sich die Metallschicht des fertigen Filters befinden soll. Auf die strukturierte Photoresistschicht 30 wird ein Metallfilm 40 aufgedampft und anschließend der Photoresist abgelöst, wobei gleichfalls der Metallfilm an den Stellen des Photoresist entfernt wird.

Mit dem Lift-Off Verfahren wird ein Nachteil des Ätzverfahrens vermieden. Bei letzterem führt die Metallschicht bei der Belichtung zu einer erhöhten Rückseitenreflexion und damit zum Auftreten von sogenannten "standing waves". Da beim Lift-Off Verfahren die Metallschicht erst nach der Belichtung aufgebracht wird, wird diese Problematik umgangen.

In Fig. 7 rechts ist das Galvanikverfahren dargestellt, bei dem auf das Substrat 10 erst eine dünne Platierschicht 50 und dann die Photoresistschicht 30 aufgebracht wird. Nach dem holographischen Belichten und Entwickeln wird die freigelegte Platierschicht 50 zu einer dickeren Metallschicht 60 galvanisch verstärkt, der Resist 30 wird abgelöst und die Lochstrukturen von der Platierschicht 50 freigeätzt.

Das Galvanikverfahren erlaubt wesentlich höhere Filterdicken, wodurch die Filtercharakteristik verbessert werden kann. Höhere Filterdicken führen zu einer besseren Bandkantendefinition und zu einer höheren Dämpfung im Reflexionsband des Filters. Bei diesem Verfahren kann die Intensität der "standing waves" dadurch verringert werden, daß eine sehr dünne Platierschicht verwendet wird.

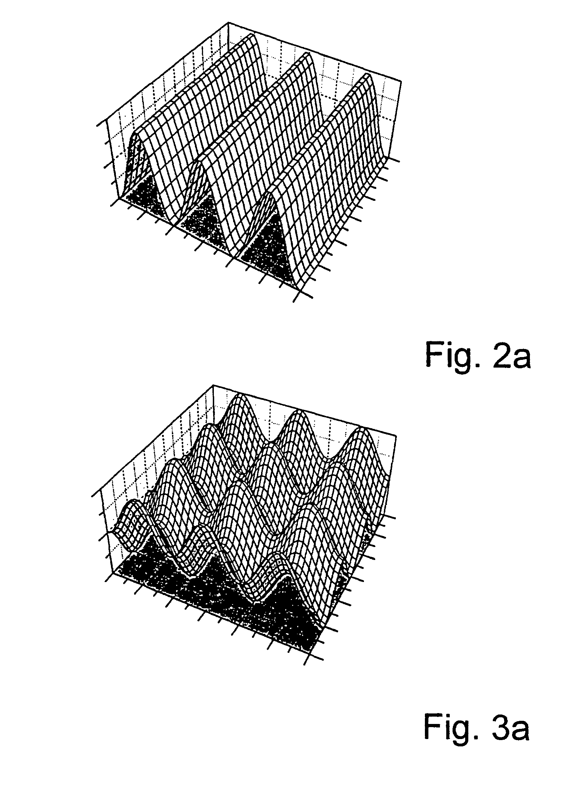

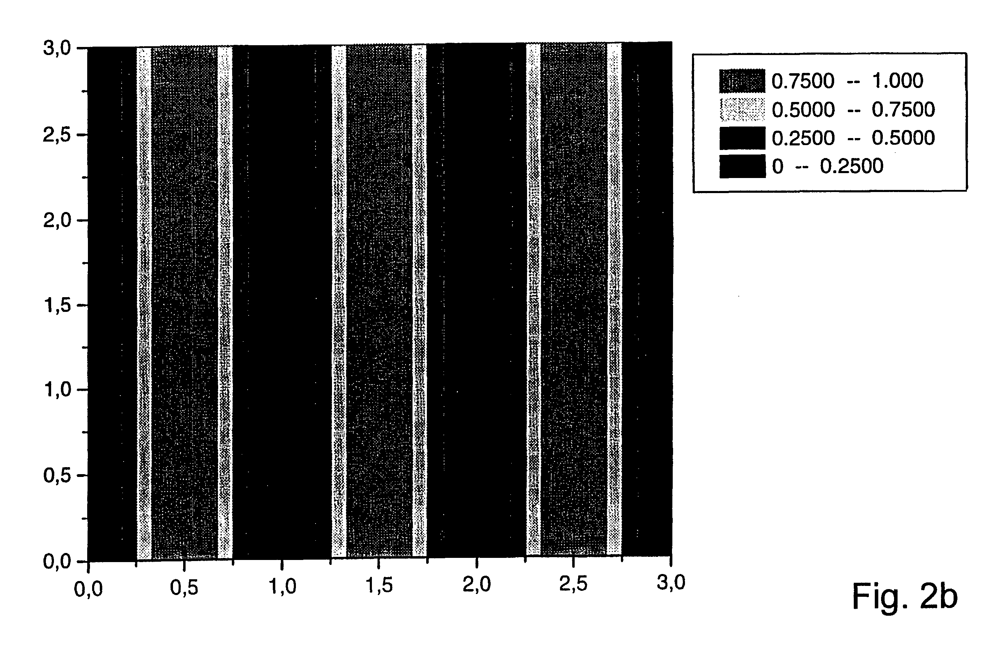

Zur Erläuterung der Belichtungstechnik ist in Fig. 2a eine dreidimensionale Darstellung von zwei überlagerten kohärenten Wellenfeldern auf der Probe und in Fig. 2b eine Aufsicht auf das durch das Belichten mit den zwei Wellen entstehende Gitter mit sinusförmiger Periode als Konturplot dargestellt. Dabei geben die Zahlenbereiche die normierte Strukturhöhe wieder.

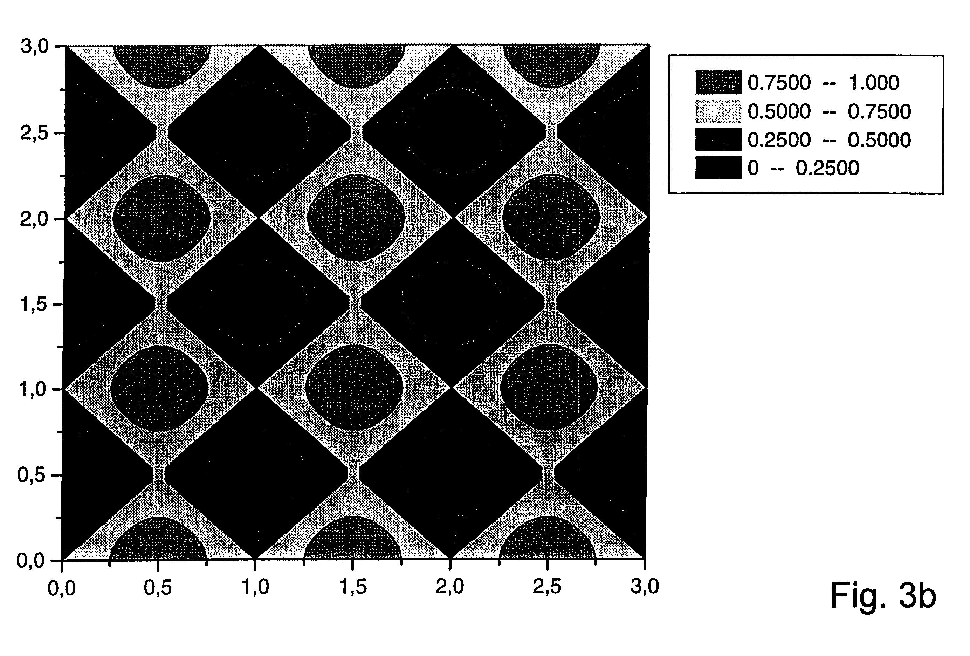

In Fign. 3a, b ist eine Darstellung entsprechend Fig. 2, bei der die Probe nach einer Belichtung (nach Fig. 2) um 90° gedreht wurde und in einem zweiten Schritt nochmals belichtet wurde.

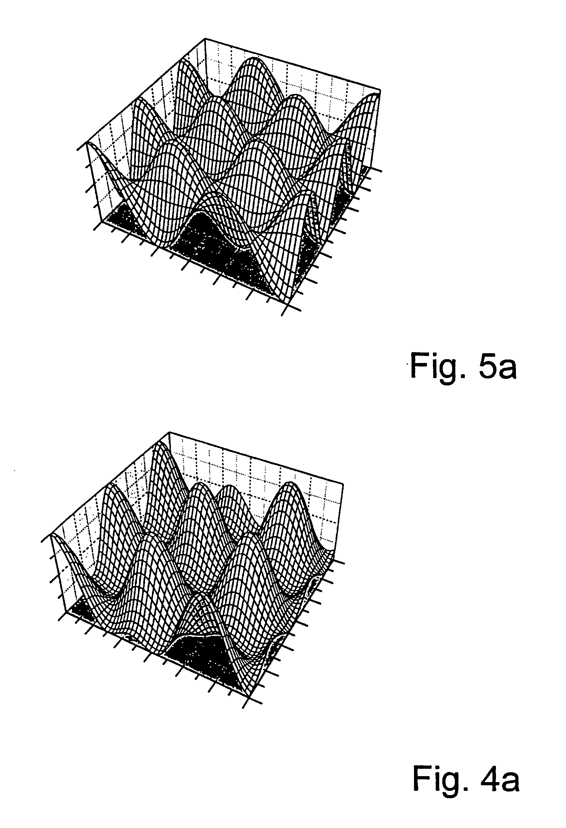

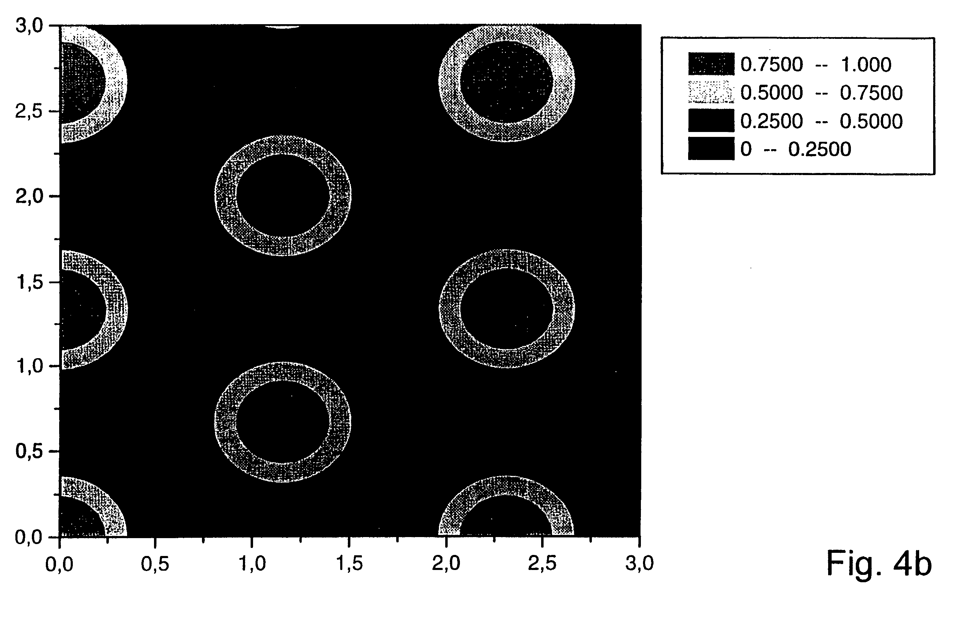

In Fig. 4a, b sind entsprechend Fig. 2 das dreidimensionale Bestrahlungsprofil und die auf der Probe entstehenden Strukturelemente als Konturplot eines hexagonalen Sinusgitters dargestellt, die durch Interferenz von drei Wellenfeldern ohne Drehung der Probe entstehen.

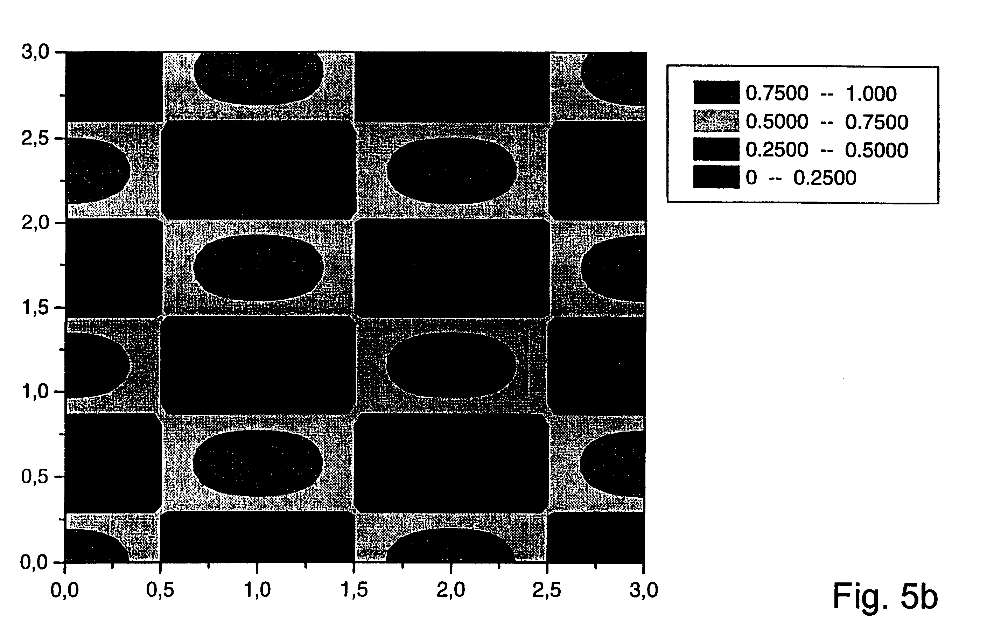

Fign. 5a, b zeigen das Ergebnis für ein hexagonales Gitter bei zwei Belichtungen und einer Drehung der Probe um 60°.

In Fig. 6 ist die Transmissionskennlinie eines resonanten Filters dargestellt, bei dem als Metallfilm eine Goldschicht mit einer Schichtdicke von etwa 0,1 µm verwendet wird. In der Goldschicht sind periodisch Löcher mit einem Lochdurchmesser von 0,5 µm angeordnet, wobei die Strukturperiode 0,76 μm beträgt.

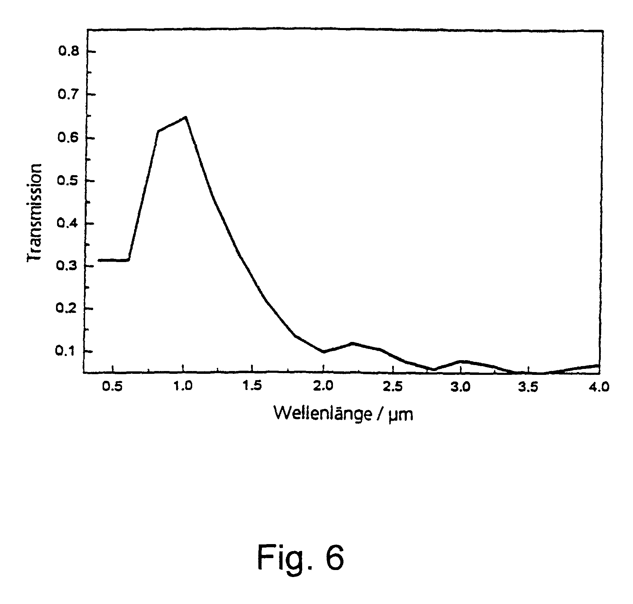

Die kreisförmigen Löcher im Metallfilm bzw. der Goldschicht verursachen relativ breite Resonanzen im Transmissionspektrum, wie in Fig. 6 zu erkennen ist. Durch die Größe der Strukturen bzw. der Strukturelemente, die zum Beispiel durch die Lochdurchmesser, die Länge der Schlitze oder durch die maximale Distanz zwischen Extrema oder dergleichen gegeben ist, wird die Wellenlänge für die maximale Transmission festgelegt und der Abstand und die Dichte, das heißt die Flächenbelegung, der einzelnen Strukturelemente bestimmt die maximal erreichbare Transmission sowie auch die im langwelligeren Bereich vorhandene Resttransmission. Die Absorption, die insgesamt sehr gering ist, kann entsprechend dem für den Metallfilm verwendeten Metall optimiert werden.

Für die Anwendung in der Thermophotovoltaik ist bei Verwendung einer Photozelle mit niedrigem Bandabstand (zum Beispiel Galliumantimonid mit 1,7 μm) ein Filter geeignet, dessen Metallschicht kreisförmige Strukturen von ca. 0,5 μm bis 0,6 μm bei einer Strukturperiode von 0,7 μm bis 1,0 μm aufweist, wobei die Metallschichtdicke etwa 0,1 μm beträgt.

**Patentansprüche**

1. Verfahren zur Herstellung von resonanten Filtern, die eine periodisch mikrostrukturierte Beschichtung in Form von in einen geschlossenen Metallfilm eingebrachten Löchern unterschiedlicher Ausbildung auf einem transparenten Substrat aufweisen, mit folgenden Schritten:

   Beschichten eines für einen gewünschten Wellenlängenbereich transparenten Substrats (10) mit einem dünnen Metallfilm (40);
   Aufbringen eines Photoresists (30) auf den dünnen Metallfilm;
   holographisches Belichten des Photoresists (30) mit periodischen Strukturelementen und Entwikkeln des Photoresists;
   Abätzen des freiliegenden Metallfilms (40) entsprechend dem vorgegebenen Muster, wobei der verbleibende Photoresist als Ätzmaske wirkt, und Entfernen des verbleibenden Photoresists,

   wobei das holographische Belichten mit mindestens zwei überlagerten kohärenten Wellenfeldern durchgeführt wird und zwei oder mehrere holographische Belichtungsschritte des Photoresists umfaßt und das Substrat zwischenzeitlich gedreht wird.

2. Verfahren zur Herstellung von resonanten Filtern, die eine periodisch mikrostrukturierte Beschichtung in Form von in einen geschlossenen Metallfilm eingebrachten Löchern unterschiedlicher Ausbildung auf einem transparenten Substrat aufweisen, mit folgenden Schritten:

   Beschichten eines für einen gewünschten Wellenlängenbereich transparenten Substrats (10) mit einem dünnen Metallfilm (50);
   Aufbringen eines Photoresists (30) auf den dünnen Metallfilm (50);
   holographisches Belichten des Photoresists mit periodischen Strukturelementen und Entwickeln des Photoresists;
   galvanisches Verstärken des freilegenden Metallfilms (50) ;
   Entfernen des Photoresists und Abritzen des durch Entfernen des Photoresists nun freiliegenden Metallfilms (50),

wobei das holographische Belichten mit mindestens zwei überlagerten kohärenten Wellenfeldern durchgeführt wird und zwei oder mehrere holographische Belichtungsschritte des Photoresists umfaßt und das Substrat zwischenzeitlich gedreht wird.

3. Verfahren zur Herstellung von resonanten Filtern, die eine periodisch mikrostrukturierte Beschichtung in Form von in einen geschlossenen Metallfilm eingebrachten Löchern unterschiedlicher Ausbildung auf einem transparenten Substrat aufweisen, mit folgenden Schritten: Beschichten eines für einen gewünschten Wellenlängenbereich transparenten Substrats (10) mit einer Photoresistschicht (30); holographisches Belichten des Photoresists (30) mit periodischen Strukturelementen und Entwikkeln des Photoresists; Aufbringen eines Metallfilms (40) auf den verbleibenden Photoresist und die freiliegenden Stellen des Substrats (10); und Ablösen des Photoresists (30) und damit auch des Metallfilms (40) an den Stellen, des Photoresists, wobei das holographische Belichten mit mindestens zwei überlagerten kohärenten Wellenfeldern durchgeführt wird und zwei oder mehrere holographische Belichtungsschritte des Photoresists umfaßt und das Substrat zwischenzeitlich gedreht wird.

4. Verfahren nach einem der Ansprüche 1 bis 3, **dadurch gekennzeichnet, daß** drei oder mehr kohärente Wellenfelder überlagert werden.

5. Verfahren nach einem der Ansprüche 1 bis 4, **dadurch gekennzeichnet, daß** der Metallfilm durch Vakuumbeschichten aufgebracht wird.

6. Verfahren nach einem der Ansprüche 1 bis 5, **dadurch gekennzeichnet, daß** als Ätzverfahren das reaktive Ionenätzen oder das naßchemische Ätzen gewählt werden.

7. Verfahren nach einem der Ansprüche 1 bis 6, **dadurch gekennzeichnet, daß** der Transmissionsverlauf des Filters abhängig von der Größe der Struktur, von dem Abstand der einzelnen Strukturelemente zueinander und/oder ihrer Dichte sowie von der Form der Strukturelemente bestimmt wird.

**Claims**

1. Process for the manufacture of resonant filters which have a periodically microstructured coating in the form of holes of different shape made in a closed metal film on a transparent substrate, with the following steps:

    coating with a thin metal film (40) of a substrate (10) which is transparent to a desired wavelength range;
    application of a photoresist (30) to the thin metal film;
    holographic exposure of the photoresist (30) with periodic structure elements and development of the photoresist;
    etching of the exposed metal film (40) in the predetermined pattern, the remaining photoresist acting as an etching mask, and removal of the remaining photoresist,

    wherein holographic exposure is carried out with at least two superimposed coherent wave fields and includes two or more steps of holographic exposure of the photoresist and the substrate is turned in the meantime.

2. Process for the manufacture of resonant filters which have a periodically microstructured coating in the form of holes of different shape made in a closed metal film on a transparent substrate, with the following steps:

    coating with a thin metal film (50) of a substrate (10) which is transparent to a desired wavelength range;
    application of a photoresist (30) to the thin metal film (50);
    holographic exposure of the photoresist with periodic structure elements and development of the photoresist;
    thickening of the exposed metal film (50) by electrodeposition;
    removal of the photoresist and etching of the metal film (50) now exposed by removal of the photoresist,

wherein holographic exposure is carried out with at least two superimposed coherent wave fields and includes two or more steps of holographic exposure of the photoresist and the substrate is turned in the meantime.

3. Process for the manufacture of resonant filters which have a periodically microstructured coating in the form of holes of different shape made in a closed metal film on a transparent substrate, with the following steps:

    coating with a photoresist layer (30) of a substrate (10) which is transparent to a desired wavelength range;
    holographic exposure of the photoresist (30) with periodic structure elements and development of the photoresist;
    application of a metal film (40) to the remaining photoresist and the exposed parts of the substrate (10) ; and
    stripping of the photoresist (30) and hence also of the metal film (40) at the locations of the photoresist,

wherein holographic exposure is carried out with at least two superimposed coherent wave fields and includes two or more steps of holographic exposure of the photoresist and the substrate is turned in the meantime.

4. Process according to any of claims 1 to 3, **characterised in that** three or more coherent wave fields are superimposed.

5. Process according to any of claims 1 to 4, **characterised in that** the metal film is applied by vacuum coating.

6. Process according to any of claims 1 to 5, **characterised in that** reactive ion etching or wet-chemical etching is selected as the etching process.

7. Process according to any of claims 1 to 6, **characterised in that** the transmission curve of the filter is defined as a function of the size of the structure, the distance between the individual structure elements and/or their density and also the shape of the structure elements.

**Revendications**

1. Procédé pour fabriquer des filtres résonants, qui comportent un revêtement à microstructure périodique, sous la forme de trous aménagés dans un film métallique fermé et selon une disposition différente dans un substrat transparent, comprenant les étapes suivantes:

recouvrement d'un substrat (10) qui est transparent pour une gamme désirée de longueurs d'onde, avec un film métallique mince (40);

dépôt d'un photoresist (30) sur le film métallique mince;

exposition holographique du photoresist (30) avec des éléments de structure périodiques et développement du photoresist;

élimination par attaque chimique du film métallique à nu (40) conformément au modèle prédéterminé, le photoresist, qui subsiste, agissant en tant que masque pour l'attaque chimique, et

élimination du photoresist qui subsiste,

l'exposition holographique étant réalisée avec au moins deux champs superposés d'ondes cohérentes, et comprenant deux ou plusieurs étapes d'exposition holographique du photoresist, et le substrat ayant pivoté entre-temps.

2. Procédé pour fabriquer des filtres résonants, qui comportent un revêtement à microstructure périodique, sous la forme de trous aménagés dans un film métallique fermé et selon une disposition différente dans un substrat transparent, comprenant les étapes suivantes:

revêtement d'un substrat (10) transparent pour une gamme désirée de longueurs d'onde, avec un film métallique mince (50) ;

dépôt d'un photoresist (30) sur le film métallique mince (50) ;

exposition holographique du photoresist avec des éléments périodiques de structure et développement du photoresist; renforcement galvanique du film métallique à nu (50);

retrait du photoresist et élimination par attaque chimique du film métallique (50) maintenant à nu en raison du retrait du photoresist,

l'exposition holographique étant réalisée avec au moins deux champs superposés d'ondes cohérentes, et comprenant deux ou plusieurs étapes d'exposition holographique du photoresist, et le substrat étant pivoté entre-temps.

3. Procédé pour fabriquer des filtres résonants, qui comportent un revêtement à microstructure périodique, sous la forme de trous aménagés dans un film métallique fermé et selon une disposition différente dans un substrat transparent, comprenant les étapes suivantes:

revêtement d'un substrat (10) transparent pour une gamme désirée de longueurs d'onde par une couche de photoresist (30) ;

exposition holographique du photoresist (30) avec des éléments de structure périodiques et développement du photoresist;

dépôt d'un film métallique (40) sur le photoresist qui subsiste et aux emplacements mis à nu du substrat (10); et

enlèvement par dissolution du photoresist (30) et par conséquent également du film métallique (40) aux emplacements du photoresist,

l'exposition holographique étant réalisée avec au moins deux champs superposés d'ondes cohérentes, et comprenant deux ou plusieurs étapes d'exposition holographique du photoresist, et le substrat étant pivoté entre-temps.

4. Procédé selon l'une des revendications 1 à 3, **caractérisé en ce que** trois ou un plus grand nombre de champs d'ondes cohérentes sont superposés.

5. Procédé selon l'une des revendications 1 à 4, **caractérisé en ce que** le film métallique est déposé au moyen d'un dépôt sous vide.

6. Procédé selon l'une des revendications 1 à 5, **caractérisé en ce qu'**on choisit comme procédé d'attaque chimique l'attaque chimique ionique réactive ou l'attaque chimique par voie humide.

7. Procédé selon l'une des revendications 1 à 6, **caractérisé en ce que** la capacité de transmission du filtre est déterminée en fonction de la taille de la structure, de la distance réciproque des différents éléments de structure et/ou de leur épaisseur ainsi que de la forme des éléments de structure.

Fig. 1

Fig. 2a

Fig. 3a

Fig. 2b

Fig. 3b

EP 1 070 268 B1

Fig. 5a

Fig. 4a

Fig. 4b

EP 1 070 268 B1

Fig. 5b

Fig. 6

# Ätzprozeß     Lift-Off-Prozeß     Galvanikprozeß

**Ätzprozeß**

30 — Resist
20 — Substrat
10 —

↓ Belichten

30 —
20 —
10 —

↓ Ätzen

↓ Resist entfernen

20
10

**Lift-Off-Prozeß**

30 — Resist — Substrat
10 —

↓ Belichten

30

↓ Bedampfen

40

↓ Lift-Off

10    40

**Galvanikprozeß**

30 — Resist — Substrat
50 —

↓ Belichten

50

↓ Galvanisieren

60

↓ Resist entfernen

50    10

↓ Ätzen

60

# Fig. 7

EP 1 070 268 B1